# EUROPEAN PATENT APPLICATION

(11) **EP 4 848 230 A2**
(43) Date of publication of application: **02.12.2026**
(21) Application number: 26206352.2
(22) Date of filing: 21.09.2026
(51) Int. Cl.: G06V 20/52

(54) **METHOD AND APPARATUS FOR PREDICTING POLLUTION DIFFUSION RISK, MEDIUM, AND DEVICE**

(30) Priority: 13.08.2026 SG 10202602829S
(71) Applicant: XG TECH PTE. LTD., Singapore 179098 (SG)
(72) Inventor: LIN, Tao, Singapore 179098 (SG); HUANG, Jingchang, Singapore 179098 (SG)
(74) Representative: Kohler Schmid Möbus Patentanwälte

(57) **Abstract**

Embodiments of the present disclosure provide a method and an apparatus for predicting a pollution diffusion risk, a medium, and a device. The method includes: collecting (100) a target image, and recognizing a pollutant based on the target image; acquiring (200) environmental information of an environment in which the pollutant is located; establishing (300), based on the pollutant and the environmental information, a pollution diffusion property model for characterizing propagation characteristics of the pollutant in the environment; and predicting (400) a pollution diffusion risk of the pollutant based on the pollution diffusion property model and the environmental information, where the pollution diffusion risk is used for characterizing a diffusion trend of the pollutant in the environment.

## Description

### TECHNICAL FIELD

The present disclosure relates to the technical field of smart homes, and in particular, to a method and an apparatus for predicting a pollution diffusion risk, a medium, and a device.

### BACKGROUND

In the field of intelligent cleaning, cleaning devices such as robotic vacuum cleaners typically have functions such as object recognition, obstacle detection, path planning, and automatic obstacle avoidance. For example, a robotic vacuum cleaner may perform object recognition through a camera, such as recognizing a toy, a shoe, or cat feces, and then clean up the cat feces based on a recognition result. However, after recognizing a pollutant, a prior cleaning device typically cleans only a current position of the pollutant. In practical applications, cleaning only the current position of the pollutant may make it difficult to obtain an ideal cleaning effect.

### SUMMARY

At present, a cleaning device can clean only a currently recognized pollutant, without considering a possibility that the pollutant may diffuse in an environment or be carried to another region, and thus cannot take targeted pollution diffusion prevention measures, resulting in a limited cleaning effect.

To resolve the above technical problem, embodiments of the present disclosure provide a method and an apparatus for predicting a pollution diffusion risk, a medium, and a device, which can predict a pollution diffusion risk of a pollutant, determine a diffusion trend of the pollutant in an environment, and further perform targeted cleaning based on a prediction result, thereby improving a cleaning effect.

According to a first aspect of the present disclosure, there is provided a method for predicting a pollution diffusion risk, including: collecting a target image, and recognizing a pollutant based on the target image; acquiring environmental information of an environment in which the pollutant is located, wherein the environmental information includes static environmental information and dynamic environmental information; establishing, based on the pollutant and the environmental information, a pollution diffusion property model for characterizing propagation characteristics of the pollutant in the environment; and predicting a pollution diffusion risk of the pollutant based on the pollution diffusion property model and the environmental information, wherein the pollution diffusion risk is used for characterizing a diffusion trend of the pollutant in the environment.

According to a second aspect of the present disclosure, there is provided an apparatus for predicting a pollution diffusion risk, including: a pollutant identification module, configured for collecting a target image, and recognizing a pollutant based on the target image; an environmental information determination module, configured for acquiring environmental information of an environment in which the pollutant is located, wherein the environmental information includes static environmental information and dynamic environmental information; and a diffusion risk prediction module, configured for establishing, based on the pollutant and the environmental information, a pollution diffusion property model for characterizing propagation characteristics of the pollutant in the environment, and predicting a pollution diffusion risk of the pollutant based on the pollution diffusion property model and the environmental information, wherein the pollution diffusion risk is used for characterizing a diffusion trend of the pollutant in the environment.

According to a third aspect of the present disclosure, embodiments of the present disclosure provide a computer readable storage medium, on which a computer program is stored, wherein the computer program is configured for implementing the method for predicting a pollution diffusion risk according to the first aspect.

According to a fourth aspect of the present disclosure, embodiments of the present disclosure provide an electronic device, including: a processor; and a memory, configured for storing instructions executable by the processor, wherein the processor is configured for reading the executable instructions from the memory and executing the executable instructions to implement the method for predicting a pollution diffusion risk according to the first aspect.

In the technical solution provided in the embodiments of the present disclosure, a target image is first collected, and a pollutant is recognized based on the target image; and then, environmental information of an environment in which the pollutant is located is acquired, wherein the environmental information includes static environmental information (such as environmental map information, spatial layout information, environmental material information, and obstacle information) and dynamic environmental information (such as category information, state information, and behavior information of a self-moving target). On this basis, a pollution diffusion property model for characterizing propagation characteristics of the pollutant in the environment is established based on the pollutant and the environmental information, and a pollution diffusion risk of the pollutant is predicted based on the model and the environmental information, to characterize a diffusion trend of the pollutant in the environment. Compared with prior cleaning devices that can only recognize a current position of a pollutant, the present disclosure can combine inherent characteristics (such as fluidity and adhesiveness) of the pollutant with static and dynamic factors (such as a floor material and a behavior of a self-moving target) in the environment to predict, in advance, a diffusion direction, a diffusion range, and a risk of the pollutant being carried and propagated, and the like, to formulate a targeted handling strategy and intervene before the pollutant actually diffuses, thereby effectively preventing pollution diffusion and improving a cleaning effect and safety.

### BRIEF DESCRIPTION OF DRAWINGS

The foregoing and other objectives, features, and advantages of the present disclosure will become more apparent from the more detailed description of the embodiments of the present disclosure with reference to the accompanying drawings. The accompanying drawings are used for a further understanding of the embodiments of the present disclosure, constitute a part of this specification, are used together with the embodiments of the present disclosure to explain the present disclosure, and do not constitute a limitation to the present disclosure. In the accompanying drawings, same reference signs typically represent same components or steps.
FIG. 1 is a schematic diagram illustrating a system for predicting a pollution diffusion risk according to an exemplary embodiment of the present disclosure.
FIG. 2 is a schematic flowchart illustrating a method for predicting a pollution diffusion risk according to an exemplary embodiment of the present disclosure.
FIG. 3 is a schematic flowchart illustrating establishment of a pollution diffusion property model according to an exemplary embodiment of the present disclosure.
FIG. 4 is a schematic flowchart illustrating prediction of a primary pollution diffusion risk according to an exemplary embodiment of the present disclosure.
FIG. 5 is a schematic flowchart illustrating prediction a secondary pollution diffusion risk according to an exemplary embodiment of the present disclosure.
FIG. 6 is a schematic flowchart illustrating determination of a diffusion risk level according to an exemplary embodiment of the present disclosure.
FIG. 7 is a schematic flowchart illustrating determination of a diffusion risk level according to another exemplary embodiment of the present disclosure.
FIG. 8 is a schematic diagram illustrating a structure of an apparatus for predicting a pollution diffusion risk according to an exemplary embodiment of the present disclosure.
FIG. 9 is a diagram illustrating a structure of an electronic device according to an exemplary embodiment of the present disclosure.

### DETAILED DESCRIPTION OF THE EMBODIMENTS

Exemplary embodiments of the present disclosure are described below in detail with reference to accompanying drawings. Obviously, the described embodiments are merely a part, rather than all, of embodiments of the present disclosure. It should be understood that the present disclosure is not limited by the exemplary embodiments described herein.

It should be noted that, unless otherwise specified, the scope of the present disclosure is not limited by relative arrangement, numeric expressions, and numerical values of components and steps described in these embodiments.

### Overview of Application

In the field of intelligent cleaning, cleaning devices such as robotic vacuum cleaners typically have functions such as obstacle detection, object recognition, path planning, and automatic obstacle avoidance. For example, a robotic vacuum cleaner may recognize a pollutant, such as paper scraps, cat feces, or oil stains, through a camera, and then clean up the cat feces based on a recognition result.

In practical applications, after recognizing a pollutant, a cleaning device can clean only a current position of the pollutant, and cannot predict a trend of the pollutant diffusing to other regions over time as the environment changes, or as the cleaning device or another moving target moves. For example, milk spilled on a floor may flow under a carpet or under an electrical appliance; broken glass may be flicked by a roller brush of a robotic vacuum cleaner to other corners; and cat feces may be smeared by a mopping cloth of the robotic vacuum cleaner and diffused throughout a house. Because current cleaning devices can only passively handle pollution that has already occurred and cannot take corresponding preventive measures against a possible pollution diffusion risk, incomplete cleaning or an expanded pollution range may result, affecting a cleaning effect.

Therefore, there is an urgent need for a method capable of predicting a pollution diffusion risk in advance, so that preventive measures can be taken in advance.

Embodiments of the present disclosure provide a new solution, applied to the technical field of smart homes and artificial intelligence, and capable of: collecting a target image, and recognizing a pollutant based on the target image; acquiring environmental information of an environment in which the pollutant is located, wherein the environmental information includes static environmental information and dynamic environmental information; establishing, based on the pollutant and the environmental information, a pollution diffusion property model for characterizing propagation characteristics of the pollutant in the environment; and predicting a pollution diffusion risk of the pollutant based on the pollution diffusion property model and the environmental information, wherein the pollution diffusion risk is used for characterizing a diffusion trend of the pollutant in the environment. Compared with prior cleaning devices that can only perform cleaning on a current pollutant, the present disclosure can predict a diffusion risk of a pollutant in advance, so that targeted preventive measures are taken, thereby effectively preventing pollution diffusion and improving a cleaning effect.

### Exemplary System

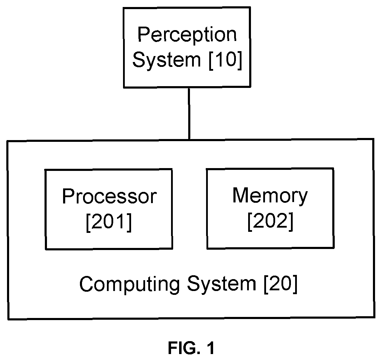

FIG. 1 is a schematic diagram illustrating a system for predicting a pollution diffusion risk according to an exemplary embodiment of the present disclosure.

As shown in FIG. 1, in an embodiment, the system for predicting a pollution diffusion risk may include a perception system 10 and a computing system 20, and data transmission may be performed between the perception system 10 and the computing system 20.

The system for predicting a pollution diffusion risk is described below by using an example in which the prediction system is applied to a robotic vacuum cleaner.

The perception system 10 may include a vision sensor, which may include an RGB (Red, Green, and Blue) camera, a depth camera, and the like, for collecting a target image containing a pollutant. On this basis, the perception system 10 may also include other sensors, such as LiDAR, an ultrasonic sensor, a humidity sensor, and a gas sensor. In some examples, the perception system 10 may be provided on the robotic vacuum cleaner. In some other examples, the perception system 10 may alternatively be provided at another position independent of the robotic vacuum cleaner. For example, the perception system 10 may include a surveillance camera provided in a room, or a camera carried by another smart home device.

The computing system 20 may be provided inside the robotic vacuum cleaner, or may be provided on the cloud. In some implementations, the computing system 20 may also be deployed on an AIPC (Artificial Intelligence Personal Computer). The AIPC may be a personal computer integrated with dedicated AI acceleration hardware, capable of efficiently running a pre-trained model (such as a convolutional neural network model or a large language model) locally, and completing computing tasks such as pollutant identification, environmental information analysis, establishment of a pollution diffusion property model, and prediction of a pollution diffusion risk, without relying on cloud computing power. Deploying the computing system 20 on the AIPC can achieve low-latency real-time inference by using local computing power of the AIPC, and can prevent sensitive data, such as home environment images, from being uploaded to the cloud, thereby protecting user privacy and security.

The computing system 20 may include one or more processors 201. The processor 201 may include a general-purpose processor, such as a CPU (Central Processing Unit) or a GPU (Graphics Processing Unit), or may include an accelerated computing unit designed for a deep learning task, a robotic vacuum cleaner navigation task, and the like, such as an NPU (Neural Processing Unit). In an implementation, a pre-trained model may be deployed on the computing system 20, and may be a lightweight convolutional neural network or a large language model. The pre-trained model may be configured for analyzing the target image collected by the perception system 10, establishing the pollution diffusion property model, and performing pollution diffusion risk prediction, and may also be configured for determining a control strategy of the robotic vacuum cleaner based on a pollution diffusion risk prediction result, so that the robotic vacuum cleaner performs a corresponding operation based on the control strategy. The present disclosure may implement an intelligent agent by relying on the pre-trained model, and the intelligent agent then performs the method provided in the present disclosure. Furthermore, the intelligent agent may also optimize the pre-trained model based on historical data to improve accuracy of the pollution diffusion risk prediction.

In an implementation, the computing system 20 may further include one or more memories 202. The memory 202 may store program instructions executable by the processor 201. The processor 201 may load and execute the program instructions in the memory 202 to implement functions of the computing system 20.

In addition, the memory 202 may also be configured for caching or storing intermediate data or result data generated by the processor 201 during operation, and storing a system file, an application file, a data file, and the like. Exemplarily, the memory 202 may store the target image and the like collected by the perception system 10.

Exemplarily, the memory 202 may include, for example, a volatile memory, such as a DRAM (Dynamic Random Access Memory) or a SRAM (Static Random Access Memory); and may also include an NVM (Non-Volatile Memory), such as a ROM (Read-Only Memory) or a flash memory.

In one implementation, the prediction system may further include an execution system (not shown in the figure). The execution system may be disposed on the robotic vacuum cleaner, and configured for performing a corresponding operation based on the aforementioned handling strategy. The execution system may include a cleaning tool (such as a roller brush), and may also include a movement tool (such as a wheel), and the like.

### Exemplary Method

The method provided in the present disclosure is exemplarily described below by using an example in which the present disclosure is applied to a cleaning device (such as a robotic vacuum cleaner).

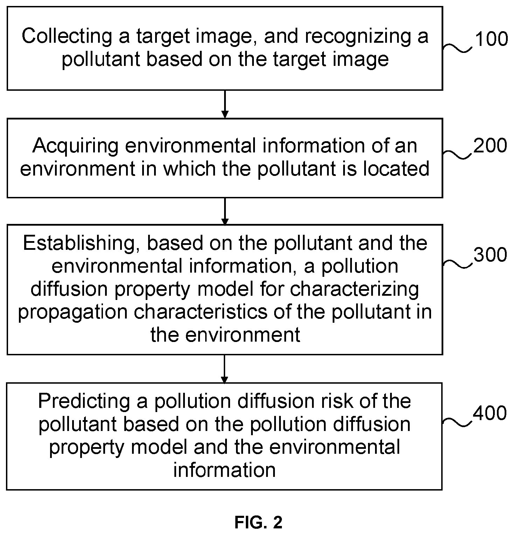

FIG. 2 is a schematic flowchart illustrating a method for predicting a pollution diffusion risk according to an exemplary embodiment of the present disclosure. As shown in FIG. 2, the method includes the following steps:
Step 100: Collecting a target image, and recognizing a pollutant based on the target image.

In step 100, a camera carried on the cleaning device collects in real time an image to be analyzed (referred to as a target image below), or an external camera independent of the cleaning device (such as a surveillance camera in a room, or a camera of another smart home device) may collect the target image, and then transmit the target image to the cleaning device or a cloud server for image analysis, to recognize a pollutant in the target image. The camera may be a monocular camera, a binocular camera, or a structured-light depth camera, and the like, which is not limited in the present disclosure.

The target image may be an RGB image containing color information, capable of containing information such as color and texture of the pollutant. In some other examples, the target image may alternatively be a depth image containing depth information, capable of containing three-dimensional shape information of the pollutant, such as size information.

Exemplarily, the target image may be collected by a camera and input to a pre-trained model for target recognition. The pre-trained model may output a category and a corresponding confidence score of each object in the target image, and recognize an object belonging to a pollutant category as the pollutant. For example, an object with a category of "cat feces" and a confidence score of 0.93 is recognized as a pollutant, while an object with a category of "toy" is excluded.

Step 200: Acquiring environmental information of an environment in which the pollutant is located.

In step 200, considering that a diffusion risk of a same pollutant can vary in different environments, for example, fluidity of water on a smooth ceramic tile is much higher than that on a carpet, and a pollutant in a region frequently accessed by a pet is more likely to be carried and diffused than in a closed room, environmental information of the environment in which the pollutant is located may be acquired to accurately assess an impact of environmental factors on diffusion of the pollutant.

The environmental information includes static environmental information and dynamic environmental information. The static environmental information refers to inherent property information that does not change over time or that changes slowly in the environment. The dynamic environmental information refers to real-time state information, in the environment, that changes over time and is related to a moving target.

In some implementations, the static environmental information includes at least one of environmental map information, spatial layout information, environmental material information, and obstacle information. The environmental map information is global or local map information of a space in which the cleaning device is located, and may include position coordinates and connectivity relationships of various regions, such as distribution of rooms including a living room, a bedroom, and a kitchen, and passage information between the rooms. The spatial layout information is functional property or usage property information of various regions in the environment. For example, the living room is a region with dense human activity, the kitchen is a region in which liquid pollution may occur, and a doorway is a high-frequency activity region. The obstacle information is position and size information of physical obstacles such as furniture, walls, and thresholds in the environment, and these obstacles may block or change a diffusion path of the pollutant.

In some implementations, the dynamic environmental information includes at least one of category information of a self-moving target, state information of the self-moving target, and behavior information of the self-moving target. The self-moving target refers to an object, in the environment, that is movable and capable of carrying a pollutant, including but not limited to a cleaning device (such as a robotic vacuum cleaner), a pet (such as a cat or a dog), a human (such as a family member), and the like. The category information is used for distinguishing types of self-moving targets. Different types of targets may carry pollutants in different ways and propagate the pollutants over different distances. For example, a robotic vacuum cleaner mainly carries a pollutant through a roller brush and wheels, and its propagation path is related to a planned path of the robotic vacuum cleaner and typically covers a plurality of rooms; while a pet cat mainly carries a pollutant through its paws and fur, and its propagation path is related to its range of activity and is typically concentrated in a region of frequent activity. The state information is used for describing a current motion state of the self-moving target, such as stationary or moving, and may also include a motion parameter such as a moving speed. The behavior information is used for describing a behavior pattern of the self-moving target, such as walking, running, playing, or performing a cleaning operation.

Step 300: Establishing, based on the pollutant and the environmental information, a pollution diffusion property model for characterizing propagation characteristics of the pollutant in the environment.

In step 300, diffusion characteristics of the pollutant in the environment are analyzed from dimensions such as fluidity, adhesiveness, propagability, and hazardousness. The fluidity is used for characterizing whether the pollutant undergoes natural diffusion due to its own physical properties (such as viscosity and density) and characteristics (such as material and inclination) of a contact surface in contact with the pollutant. The adhesiveness is used for characterizing whether the pollutant easily adheres to another surface or object (such as a roller brush or a wheel of the cleaning device, or a carpet). The propagability is used for characterizing whether the pollutant is easily carried away from an original region by a self-moving target (such as a cleaning device, a pet, or a person). The hazardousness is used for characterizing a safety risk (such as scratching, accidental ingestion, or slipping) that may be caused by the pollutant. The pollution diffusion property model of the pollutant under the current environment can be obtained by combining analysis results of the above dimensions, wherein the pollution diffusion property model is capable of describing the propagation characteristics and diffusion capability of the pollutant in the environment.

Step 400: Predicting a pollution diffusion risk of the pollutant based on the pollution diffusion property model and the environmental information.

In step 400, in combination with the environmental information of the environment in which the pollutant is located and the pollution diffusion property model established in step 300 described above, a diffusion trend of the pollutant in the current environment, including but not limited to a possible diffusion direction, range, and speed of the pollutant, as well as a risk of the pollutant being carried to a new position, is predicted to obtain the pollution diffusion risk of the pollutant. For example, a risk of natural diffusion of the pollutant (such as a flow path of a liquid on an inclined floor) may be analyzed based on fluidity and adhesiveness in the pollution diffusion property model, a risk of the pollutant being carried and diffused to another region by a self-moving target (such as cat litter being carried away from an original region after being trodden on by a pet) may be analyzed based on propagability, and a final pollution diffusion risk prediction result may be generated by combining the above analysis results.

The pollution diffusion risk is used for characterizing the diffusion trend of the pollutant in the environment. For example, the pollution diffusion risk may be quantified as a diffusion level (high/medium/low), may also be represented as a specific diffusion path or diffusion probability distribution, or may also be represented as a target region to which the pollutant may diffuse, and the like.

It can be understood that the pollution diffusion risk can reflect a direction and a range in which the pollutant may diffuse in the current environment, as well as a probability of the pollutant being carried and propagated. Therefore, based on the prediction result of the pollution diffusion risk, a corresponding handling strategy can be formulated in a targeted way to intervene before actual diffusion of the pollutant, thereby effectively controlling a pollution range.

In some implementations, the pollution diffusion risk may be used for formulating a handling strategy for the pollutant. Specifically, a corresponding handling strategy may be determined based on the specific content and level of the pollution diffusion risk.

The handling strategy may include a cleaning strategy. The cleaning strategy is used for constraining a behavior of the cleaning device when the cleaning device performs a cleaning operation, such as prioritizing cleaning of a high-risk diffusion region, adjusting a cleaning path to contain a pollutant, turning off a roller brush in a region with an adhesive pollutant to prevent pollution diffusion, or reducing a traveling speed in a liquid region to reduce liquid splashing.

The handling strategy may include an avoidance strategy. The avoidance strategy is used for constraining a movement behavior of the cleaning device or another self-moving target, such as controlling the device to avoid a no-entry region, such as avoiding a predicted high-risk diffusion region to prevent the device from becoming a medium for propagating the pollutant.

The handling strategy may include an alert strategy. The alert strategy is used for issuing an alert message to a user, such as notifying the user through voice broadcast, mobile terminal push notification, or the like, when high-risk diffusion is predicted, so that the user can take timely action. In addition, the alert message may also include content such as a type, a position, and a diffusion risk level of the pollutant.

As can be learned from the above technical solution, according to the method provided in the embodiments of the present disclosure, a target image is collected to recognize a pollutant, environmental information including static and dynamic information is acquired, a pollution diffusion property model of the pollutant is established, and a pollution diffusion risk is predicted by combining the model with the environmental information. In this way, a diffusion trend of the pollutant can be predicted and a corresponding handling strategy can be formulated, so that effective intervention is performed before actual diffusion of the pollutant, thereby improving a cleaning effect and preventing expansion of a pollution range.

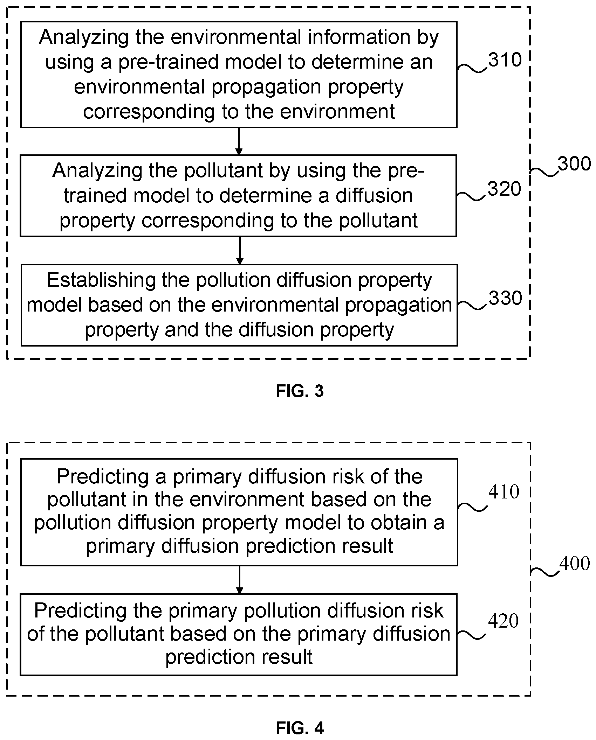

FIG. 3 is a schematic flowchart illustrating establishment of a pollution diffusion property model according to an exemplary embodiment of the present disclosure. As shown in FIG. 3, based on the foregoing embodiment shown in FIG. 2, step 300 may include the following steps:
Step 310: Analyzing the environmental information by using a pre-trained model to determine an environmental propagation property corresponding to the environment.

In step 310, the environmental information acquired in step 200 described above is input to the pre-trained model, and the pre-trained model is used to analyze an impact of various factors in the environment on propagation of the pollutant and output an environmental propagation property. The environmental propagation property may be used for describing a degree to which the environment promotes or inhibits the diffusion of the pollutant.

For example, environmental material information in the environmental map information may be analyzed to obtain an environmental propagation property related to a floor material. For a tile floor, whose surface is smooth and non-water-absorbent, the environmental propagation property may include an easy-to-flow characteristic (a liquid pollutant easily flows and diffuses on the surface). For a carpet floor, whose surface is soft and has a fibrous structure, the environmental propagation property may include an easy-to-absorb characteristic (a pollutant is easily absorbed and fixed by fibers, and is less likely to flow naturally but may become embedded deep within the carpet). For a wooden floor, whose surface has a certain texture and slight absorbency, the environmental propagation property may include a liquid-easy-diffusion characteristic (a liquid pollutant may slowly diffuse along a direction of the texture).

For another example, the environmental map information may be analyzed to obtain an environmental propagation property related to a spatial position. For example, if presence of a carpet region (Floor_Type = Carpet) is recognized, it can be inferred that "a carpet pollution risk exists in this region".

For another example, behavior hotspot information in the dynamic environmental information may be analyzed to obtain an environmental propagation property related to an activity region. For example, if a high-frequency activity region exists in a pet behavior hotspot (Pet_Activity_Hotspot = TRUE), it can be inferred that "a risk of propagation by pet trampling exists in this region".

Step 320: Analyzing the pollutant by using the pre-trained model to determine a diffusion property corresponding to the pollutant.

In step 320, the pollutant recognized in step 100 described above is further analyzed by using the pre-trained model, to analyze physical characteristics and category properties of the pollutant and determine the diffusion property corresponding to the pollutant. For example, the pre-trained model may output information, such as a type, a position, a coverage area, and a confidence score of the pollutant, based on visual features (such as color, texture, and shape) of the pollutant and/or perceptual features (such as humidity and density) acquired by another sensor. For example, the following information may be output:
Pollutant category = cat feces; coordinates = (x, y); coverage area = 0.15 square meters; and confidence score = 0.93.

In some examples, the type of the pollutant may be one of a plurality of preset types. Specifically, a plurality of preset types, such as water, milk, and cat feces, may be preset, and the pre-trained model may match an identification result to a closest preset type. For example, when recognizing a puddle of dark brown viscous substance, the model classifies the substance as the cat feces type if visual features of the substance have the highest matching degree with the preset cat feces type.

In some examples, each preset type may belong to a preset category. For example, water and milk belong to a liquid pollution category, cat feces and vomit belong to an adhesive pollution category, cat litter and broken glass belong to a granular pollution category, and hair and dust belong to a dust pollution category. In this way, even if the pre-trained model does not have a high enough confidence score for recognizing a specific type, preliminary determination can still be made based on commonality of a preset category to which the specific type belongs. For example, even if cola and soy sauce cannot be accurately distinguished, subsequent analysis can still be performed based on high fluidity and low adhesiveness characteristics of the liquid pollution category, so that a pollution diffusion risk prediction result with certain reference value can still be obtained even when the confidence score is not high.

Step 330: Establishing the pollution diffusion property model based on the environmental propagation property and the diffusion property.

In step 330, the environmental propagation property obtained in step 310 described above and the diffusion property of the pollutant obtained in step 320 are comprehensively analyzed, and interaction between characteristics of the pollutant and environmental factors is considered to establish the pollution diffusion property model of the pollutant under the current environment.

The pollution diffusion property model is capable of describing multi-dimensional characteristics of the propagation of the pollutant in the environment. The pollution diffusion property model may include dimensions such as fluidity, adhesiveness, propagability, and hazardousness. The fluidity is capable of characterizing whether the pollutant undergoes natural diffusion due to its own physical properties (such as viscosity and density) and characteristics (such as material and inclination) of a contact surface. For example, water has high fluidity, milk has medium fluidity, and cat feces have low fluidity. The adhesiveness is capable of characterizing whether the pollutant easily adheres to a surface of a roller brush, a wheel, a carpet, or the like. For example, cat feces have high adhesiveness, oil stains have high adhesiveness, and water has low adhesiveness. The propagability is capable of characterizing whether the pollutant is easily carried away from an original region by various types of self-moving targets (such as a cleaning device, a pet, or a person). For example, cat litter has high propagability, hair has medium propagability, and glass has low propagability. The hazardousness is capable of characterizing a safety risk that may be caused by the pollutant, and may include a safety risk type and a safety risk level. One pollutant may correspond to one or more risk types, and each risk type has its own risk level (such as high risk, medium risk, or low risk). For example, glass corresponds to a scratching risk type, a pill corresponds to a risk type of accidental ingestion by a child, a liquid corresponds to a slipping risk type, and cat feces may correspond to a biohazard risk (high risk) and a slipping risk (medium risk).

The pollution diffusion property model can be obtained by combining analysis results of the above dimensions. For example, for water on a tile, the following pollution diffusion property model can be obtained:
Pollution diffusion property = {fluidity: high; adhesiveness: low; propagability: low; risk type: slipping risk; risk level: medium}.

As can be learned from the above technical solution, according to the method provided in the embodiments of the present disclosure, an environmental propagation property and a diffusion property of a pollutant are separately analyzed and then combined to establish a pollution diffusion property model, so that propagation characteristics of the pollutant in an environment can be comprehensively analyzed from a plurality of dimensions, thereby providing a data basis for subsequent diffusion risk prediction.

In one implementation, the pollution diffusion risk may include a primary pollution diffusion risk of the pollutant in the environment due to physical properties of the pollutant. In another implementation, when a self-moving target exists in the environment, the pollution diffusion risk may include a secondary pollution diffusion risk of the pollutant being carried to another position due to movement of the self-moving target.

In another implementation, when a self-moving target exists in the environment, in addition to including a primary pollution diffusion risk, the pollution diffusion risk may further include a secondary pollution diffusion risk of the pollutant being carried to another position due to movement of the self-moving target.

In practical applications, a prediction strategy for the pollution diffusion risk may be flexibly selected based on the diffusion property of the pollutant, the environmental information, computing resource constraints, real-time requirements, and the like. For example, for a pollutant with relatively high fluidity (such as water or milk), considering that a possibility of natural diffusion thereof is relatively high, prediction of the primary pollution diffusion risk may be prioritized. For a pollutant with relatively low fluidity but relatively high adhesiveness (such as cat feces), considering that a possibility of natural diffusion thereof is extremely low and a main diffusion risk comes from the pollutant being carried and propagated by a self-moving target, only prediction of the secondary pollution diffusion risk may be performed. For a scenario in which a possibility of natural diffusion of the pollutant is relatively high and a self-moving target also exists in the environment (such as a liquid located in a pet activity region), prediction of both the primary pollution diffusion risk and the secondary pollution diffusion risk may be performed, wherein the primary pollution diffusion risk and the secondary pollution diffusion risk together constitute complete pollution diffusion risk prediction to comprehensively assess the pollution diffusion risk.

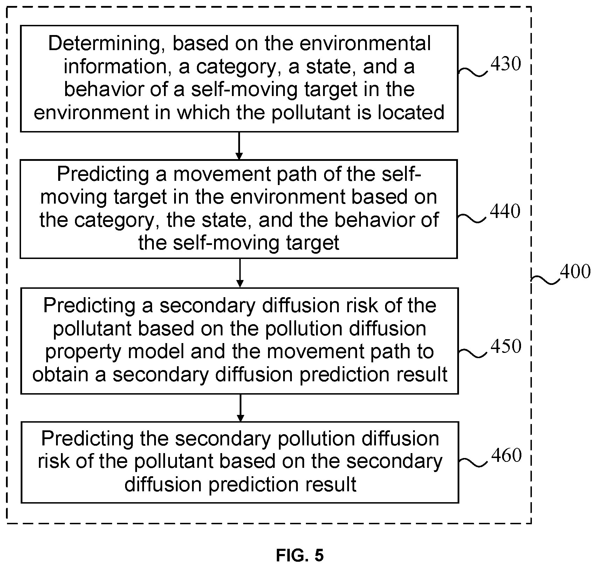

The method for predicting the primary pollution diffusion risk and the secondary pollution diffusion risk is described in detail below with reference to FIG. 4 and FIG. 5, respectively.

FIG. 4 is a schematic flowchart illustrating prediction of a primary pollution diffusion risk according to an exemplary embodiment of the present disclosure. As shown in FIG. 4, on the basis of the embodiment shown in FIG. 2 described above, the pollution diffusion risk of the pollutant includes a primary pollution diffusion risk, and step 400 may include the following steps:
Step 410: Predicting a primary diffusion risk of the pollutant in the environment based on the pollution diffusion property model to obtain a primary diffusion prediction result.

In step 410, based on the pollution diffusion property model, for example, based on information of fluidity and adhesiveness dimensions in the pollution diffusion property model, the primary diffusion risk of the pollutant naturally diffusing in the environment due to only physical properties of the pollutant, without intervention by an external object (such as a cleaning device, a pet, or a person), is predicted to obtain the primary diffusion prediction result. The primary diffusion risk may include a diffusion risk of the pollutant on a contact surface due to a physical process such as gravity or penetration, with no consideration of the pollutant being carried by an external object.

In some examples, whether the pollutant naturally flows or spreads under the action of gravity, surface tension, or the like may be determined based on the fluidity of the pollutant; and whether the pollutant is fixed at the original position or slowly penetrates due to interaction with the contact surface may be determined based on the adhesiveness of the pollutant. For example, a pollution diffusion property model of water dripped onto a tile floor may include high fluidity and low adhesiveness; therefore, it can be predicted that the water rapidly spreads and covers a relatively large area within a short period of time. A pollution diffusion property model of water dripped onto a carpet may include medium fluidity and low adhesiveness, but carpet fibers hinder the flow; therefore, it can be predicted that the water will be absorbed by the carpet fibers and slowly diffuse in all directions, with a diffusion speed significantly lower than that on a tile surface. For another example, if a floor of a region in which the pollutant is located slopes, a direction in which the pollutant flows along the slope by gravity and a region reachable by the pollutant may be predicted, for example, a liquid on the slope may flow down the slope toward a low-lying region. Floor slope information may be acquired from the spatial layout information in the environmental map information, or may be detected in real time by an IMU (Inertial Measurement Unit) of the cleaning device during movement.

Step 420: Predicting the primary pollution diffusion risk of the pollutant based on the primary diffusion prediction result.

In step 420, the primary diffusion prediction result obtained in step 410 described above is comprehensively assessed and quantified, to form an overall determination result of the primary pollution diffusion risk of the pollutant. Specifically, based on predicted information such as a diffusion range, a diffusion speed, a diffusion direction, a diffusion path, and a sensitive region that may be reached, the primary diffusion risk may be quantified into a plurality of levels (such as high, medium, and low), or a structured risk description may be generated, to form the primary pollution diffusion risk of the pollutant.

For example, if it is predicted that a liquid will rapidly diffuse to a large surrounding region and may come into contact with a base of an electrical appliance, the primary pollution diffusion risk may be assessed as "high", corresponding to a cleaning strategy requiring immediate handling. If it is predicted that the liquid will only form a small stain in place with an extremely slow diffusion speed, the primary pollution diffusion risk may be assessed as "low", corresponding to a cleaning strategy that allows for postponed handling.

As can be learned from the above technical solution, according to the method provided in the embodiments of the present disclosure, a primary pollution diffusion risk of a pollutant in an environment due to physical properties of the pollutant is predicted based on dimensions such as fluidity and adhesiveness in a pollution diffusion property model, so that a natural diffusion trend and a risk of the pollutant can be accurately predicted, thereby providing a basis for subsequent formulation of a cleaning strategy.

FIG. 5 is a schematic flowchart illustrating prediction a secondary pollution diffusion risk according to another exemplary embodiment of the present disclosure. As shown in FIG. 5, on the basis of the embodiment shown in FIG. 2 described above, the pollution diffusion risk of the pollutant includes a secondary pollution diffusion risk, and step 400 may include the following steps:
Step 430: Determining, based on the environmental information, a category, a state, and a behavior of a self-moving target in the environment in which the pollutant is located.

In step 430, based on the dynamic environmental information acquired in step 200 described above, a self-moving target present in the environment in which the pollutant is located and related information thereof, including but not limited to a category, a state, and a behavior of the self-moving target, are determined. The self-moving target refers to an object, in the environment, that is movable and capable of carrying a pollutant, including but not limited to a cleaning device (such as a robotic vacuum cleaner), a pet (such as a cat or a dog), a human (such as a family member), and the like. For each self-moving target, related information such as a category (such as a pet or a cleaning device), a current state (such as stationary or moving), and a behavior pattern (such as walking or performing a cleaning operation) may be determined.

In some examples, the related information of the self-moving target described above may be obtained in various ways. Specifically, an image may be captured through a camera and then undergoes object detection, to recognize the category of the self-moving target. A position change and a movement trajectory of the self-moving target may be acquired through LiDAR or multi-frame image tracking, to determine a movement state and a motion parameter such as a moving speed of the self-moving target. A historical movement trajectory and a current behavior pattern of the self-moving target may be analyzed through a pre-trained model, to determine a behavior type of the self-moving target. For example, if a cat is detected moving in a pet activity region in an environmental map, it can be determined that a self-moving target "pet cat" exists, with a state of "moving" and a behavior of "walking". For another example, if it is detected that a robotic vacuum cleaner is performing a cleaning task and its planned path passes near the region in which the pollutant is located, it can be determined that a self-moving target "cleaning device - robotic vacuum cleaner" exists, with a state of being "in operation" and a behavior of "cleaning along the planned path".

Step 440: Predicting a movement path of the self-moving target in the environment based on the category, the state, and the behavior of the self-moving target.

In step 440, based on the category, state, and behavior information of the self-moving target determined in step 430 described above, in combination with the environmental map information and the spatial layout information, a movement path that each self-moving target may pass through within a future period of time is predicted. Specifically, a possible future movement path of a cleaning device (such as a robotic vacuum cleaner) may be predicted based on a current planned path and a task objective of the cleaning device, and the like. A region and a movement path that a pet may pass through may be predicted based on a historical activity pattern and a current movement direction and speed of the pet, and the like. A possible activity region and movement path of a human may be predicted based on a human identity, a functional property of a room (such as a kitchen, a bedroom, or a living room), a current time period (such as a mealtime or rest time), a historical activity pattern, and the like. Exemplarily, if a cat is detected walking in a pet activity region in the living room, a movement path of the cat may be predicted, based on historical behavior hotspot information of the region and a current movement direction of the cat, to possibly pass through a central region of the living room and extend to a kitchen doorway. If it is detected that a planned path of the robotic vacuum cleaner will pass through the region in which the pollutant is located, it may be predicted that a movement path of the robotic vacuum cleaner is about to cover the position of the pollutant. If the current time period is a time period during which a child typically plays in the living room, it may be predicted that a movement path of the child is concentrated in the living room region.

Step 450: Predicting a secondary diffusion risk of the pollutant based on the pollution diffusion property model and the movement path to obtain a secondary diffusion prediction result.

In step 450, the pollution diffusion property model established in step 330 described above and the movement path of the self-moving target predicted in step 440 described above are comprehensively analyzed, to predict the secondary diffusion risk of the pollutant being carried or propagated to another position due to movement of the self-moving target, to obtain the secondary diffusion prediction result.

Specifically, comprehensive determination may be made from the following aspects: a roller-brush propagation risk, for example, if the pollutant has high adhesiveness and the cleaning device is about to pass through the pollution region, the roller brush of the cleaning device may pick up the pollutant and fling it to the surrounding region, resulting in an expanded pollution range; a wheel propagation risk, for example, if the pollutant is a liquid or powder and the self-moving device is about to pass through the pollution region, the pollutant may adhere to a surface of a wheel and be carried to another room as the wheel moves, resulting in cross-region propagation; a carpet pollution risk, for example, if the pollutant is located near a carpet and has fluidity, a liquid may flow into the carpet region and penetrate deep into fibers, resulting in escalation of the pollution; and a human contact risk, for example, if the pollutant is located in a child activity region or a region with high-frequency human activity, and a predicted pollution diffusion range covers such regions, there exists a risk of a human coming into contact with a hazardous substance (such as scratches from broken glass, exposure to a chemical substance, or spread of pathogens). It should be noted that the above aspects are merely exemplary illustrations, and a person skilled in the art may flexibly expand thereon based on actual application scenarios. This is not limited in the present disclosure.

Exemplarily, if it is found that cat litter is located in a pet activity region and a pet is moving, it can be predicted, in combination with information such as a propagability dimension in the pollution diffusion property model of the cat litter, that the cat litter will diffuse to another region along a trajectory of the pet, forming a secondary diffusion risk. For another example, if it is found that the planned path of the robotic vacuum cleaner will pass through the pollution region in which cat feces are located, the system may predict the propagation way of the pollution, including the cat feces possibly entering the roller brush and causing pollution diffusion throughout the house, and the pollutant possibly adhering to a wheel surface and causing cross-room propagation, and so on. For another example, if a liquid is detected at an edge of a carpet, it can be predicted that the liquid is about to flow into the carpet region, causing escalation of the pollution level. For another example, if it is predicted that the pollution diffusion range will cover a child activity region, child contact risk determination may be generated, indicating a safety risk that a child may come into contact with the pollutant. The secondary diffusion risk of the pollutant can be comprehensively assessed by comprehensively analyzing the above various propagation paths.

Step 460: Predicting the secondary pollution diffusion risk of the pollutant based on the secondary diffusion prediction result.

In step 460, the secondary diffusion prediction result obtained in step 450 described above is comprehensively assessed and quantified, to form an overall determination result of the secondary pollution diffusion risk of the pollutant. Specifically, the secondary diffusion risk may be quantified into a plurality of levels (such as high, medium, and low), based on information such as the number of predicted propagation paths, a sensitive region (such as a bedroom, a kitchen countertop, or a child activity region) to which the pollutant may be carried, a propagation distance, and the hazardousness of the pollutant. Exemplarily, if it is predicted that a pollutant (such as cat feces) may diffuse to a plurality of rooms through both roller-brush propagation and wheel propagation, and involves a child activity region, the secondary pollution diffusion risk may be assessed as "high", and a corresponding handling strategy may include "issuing a prompt message to the user, and prohibiting the robotic vacuum cleaner from performing a cleaning task on the pollutant". If it is predicted that only a low-probability, minor propagation risk exists and no sensitive region is involved, the secondary pollution diffusion risk may be assessed as "low", and a corresponding handling strategy may include "continuing monitoring, but not interrupting the routine task for the time being".

As can be learned from the above technical solution, according to the method provided in the embodiments of the present disclosure, determining a self-moving target and predicting a movement path of the self-moving target, in combination with a pollution diffusion property model of a pollutant, can predict a secondary pollution diffusion risk caused by the pollutant being carried to another region by the self-moving target, so that a targeted preventive measure can be taken before actual diffusion of pollution, thereby effectively controlling a pollution range and avoiding a secondary risk.

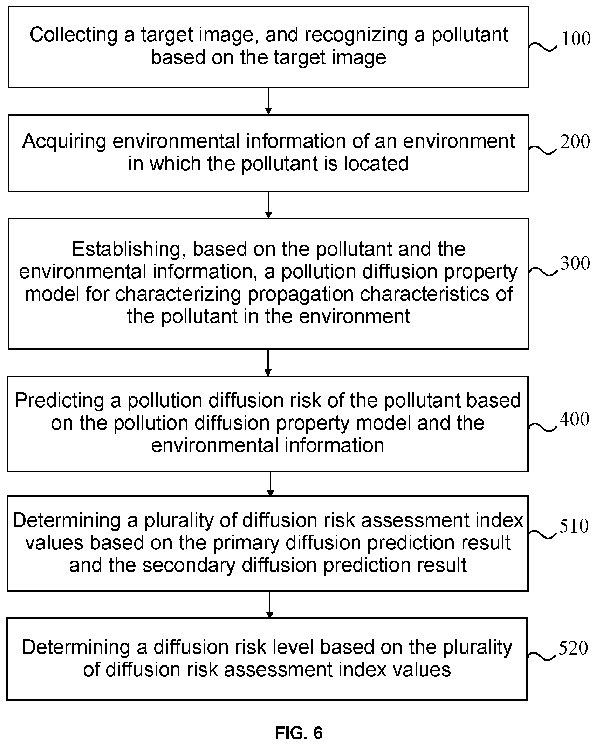

FIG. 6 is a schematic flowchart illustrating determination of a diffusion risk level according to an exemplary embodiment of the present disclosure. As shown in FIG. 6, on the basis of the embodiments shown in FIG. 4 and FIG. 5 described above, after step 400, assessment of the diffusion risk level may further be performed, which may specifically include the following steps:
Step 510: Determining a plurality of diffusion risk assessment index values based on the primary diffusion prediction result and the secondary diffusion prediction result.

In step 510, the primary pollution diffusion risk and the secondary pollution diffusion risk obtained in the foregoing steps are comprehensively analyzed, to extract and quantify diffusion risk assessment index values of a plurality of dimensions.

Specifically, a fluidity index and an adhesiveness index may be extracted from the primary diffusion prediction result, wherein the fluidity index and the adhesiveness index may respectively reflect a degree of risk of natural diffusion of the pollutant due to physical properties of the pollutant and a degree of firmness with which the pollutant adheres to the contact surface.

Specifically, a propagability index and a consequence-level index may be extracted from the secondary diffusion prediction result, wherein the propagability index and the consequence-level index may respectively reflect a degree of risk of the pollutant being carried and propagated by a self-moving target and severity of a consequence that may result after the pollution diffuses.

Meanwhile, a hazardousness index may also be extracted from the pollution diffusion property model, wherein the hazardousness index reflects a type and a degree of a safety risk that the pollutant may cause.

In this way, assessment index values of a plurality of dimensions can be obtained by combining analysis results of both aspects of the primary diffusion risk and the secondary diffusion risk. In some examples, each index value may be quantified into a numerical value between 0 and 100, to facilitate subsequent weighted calculation and level classification. In addition, each index value may also be quantified in another way, such as being represented as a normalized numerical value between 0 and 1, or a discrete level value. This is not limited in the present disclosure.

Step 520: Determining a diffusion risk level based on the plurality of diffusion risk assessment index values.

In step 520, weighted summation is performed on the plurality of diffusion risk assessment index values determined in step 510 described above to obtain a comprehensive risk score, and the diffusion risk level is further determined based on a preset threshold interval. Exemplarily, the comprehensive risk score Risk may be calculated using the following formula:
$Risk = {w}_{1} \times F + {w}_{2} \times {A + w}_{3} \times {P + w}_{4} \times D + {w}_{5} \times C ,$
wherein F is the fluidity index, A is the adhesiveness index, P is the propagability index, D is the hazardousness index, and C is the consequence-level index; and w₁ to w₅ are weighting coefficients corresponding respectively to the diffusion risk assessment indexes, and specific values of the weighting coefficients may be set and adjusted based on an actual application scenario.

After the comprehensive risk score is obtained through the weighted summation described above, the score may be mapped to a corresponding diffusion risk level based on the preset threshold interval. Exemplarily, the following threshold division may be set:
when the comprehensive risk score is within an interval [0, 30), the diffusion risk level is "low risk";
when the comprehensive risk score is within an interval [30, 60), the diffusion risk level is "medium risk";
when the comprehensive risk score is within an interval [60, 80), the diffusion risk level is "high risk"; and
when the comprehensive risk score is within the interval [80, 100], the diffusion risk level is "extremely high risk".

It should be noted that in the above example, a final diffusion risk level is obtained by comprehensively analyzing the primary pollution diffusion risk and the secondary pollution diffusion risk. In some other examples, such as when no person, pet, cleaning device, or the like passes through a closed space, considering that only the primary pollution diffusion risk exists in the scenario and no secondary pollution diffusion risk exists, the propagability index and the consequence-level index may be set to a relatively low value or to zero, so that the diffusion risk level is determined based only on the primary diffusion risk.

In some implementations, the diffusion risk level is used for formulating a handling strategy for the pollutant. The handling strategy may include at least one of a cleaning strategy, an avoidance strategy, and an alert strategy. For details, reference may made to the relevant description of step 400 above, which will not be repeated herein.

As can be learned from the above technical solution, according to the method provided in the embodiments of the present disclosure, a plurality of assessment index values are determined based on a primary diffusion prediction result and a secondary diffusion prediction result, and a comprehensive risk score is obtained through weighted fusion to classify a diffusion risk level, so that an overall diffusion risk of a pollutant in an environment can be comprehensively quantified, thereby providing a quantitative basis for formulating a handling strategy.

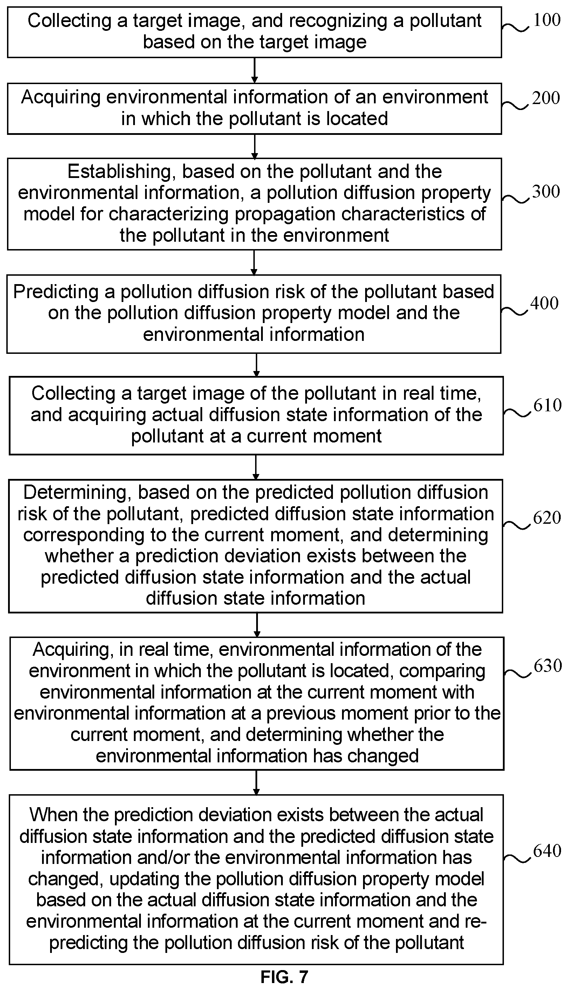

FIG. 7 is a schematic flowchart illustrating determination of a diffusion risk level according to another exemplary embodiment of the present disclosure. As shown in FIG. 7, on the basis of the embodiment shown in FIG. 2 described above, after step 400, adaptive closed-loop adjustment of the pollution diffusion risk may further be performed, which may specifically include the following steps:
Step 610: Collecting a target image of the pollutant in real time, and acquiring actual diffusion state information of the pollutant at a current moment.

In step 610, after the pollution diffusion risk is determined and predicted through step 400, a target image containing the pollutant may be continuously or periodically collected, and actual diffusion state information of the pollutant at a current moment may be acquired through image analysis. The actual diffusion state information may include, but is not limited to, information such as an actual coverage area, an actual diffusion range, an actual position offset, and a shape change of the pollutant.

Specifically, a target image may be continuously collected by a camera, and the target image collected at the current moment may be compared with the target image collected in step 100 described above, or a pixel region occupied by the pollutant in the target image collected at the current moment may be recognized through an image segmentation algorithm or the like, to calculate an actual diffusion area and a diffusion shape change of the pollutant at the current moment. For example, if a puddle of liquid pollutant with a coverage area of 0.05 square meters is recognized based on the target image collected in step 100 described above, and in the target image collected at the current moment, the liquid coverage area has expanded to 0.12 square meters, it can be determined that an actual diffusion state of the pollutant is "diffused", with a diffusion area of 0.12 square meters.

Step 620: Determining, based on the predicted pollution diffusion risk of the pollutant, predicted diffusion state information corresponding to the current moment, and determining whether a prediction deviation exists between the predicted diffusion state information and the actual diffusion state information.

In step 620, from the pollution diffusion risk predicted in step 400 described above, predicted diffusion state information that should occur at the current moment is extracted, as the predicted diffusion state information corresponding to the current moment. The predicted diffusion state information is then compared with the actual diffusion state information acquired in step 610 described above, to determine whether a prediction deviation exists therebetween.

In some examples, predicted information such as a predicted coverage area, a predicted diffusion range, and a predicted diffusion direction of the pollutant at the current moment may be acquired from a prediction result, and compared with actual information such as an actually collected actual coverage area, actual diffusion range, and actual diffusion direction. If a difference between the actual information and the predicted information exceeds an allowable error threshold of the predicted diffusion range, it can be determined that a prediction deviation exists.

For example, at 10:00:00, a target image is collected and a pollution diffusion risk is predicted through step 100 described above, and the prediction result includes a predicted coverage area of the pollutant at 10:00:30, such as 0.08 square meters. If a target image is collected at 10:00:30 and it is determined that the actual coverage area of the pollutant is 0.15 square meters, and the difference between the actual coverage area and the predicted coverage area exceeds the allowable error threshold, it is considered that a prediction deviation exists.

Step 630: Acquiring, in real time, environmental information of the environment in which the pollutant is located, comparing environmental information at the current moment with environmental information at a previous moment prior to the current moment, and determining whether the environmental information has changed.

In step 630, environmental information of the environment in which the pollutant is located is continuously acquired, and environmental information acquired at the current moment is compared with environmental information acquired at a previous moment (or the moment at which the target image is collected in step 100), to determine whether the environment has changed.

Specifically, determination may be made from the following aspects: whether the static environmental information has changed, for example, whether a floor material of a region in which the pollutant is located has changed (such as a temporary floor mat being laid), or whether a position of an obstacle has moved; and whether the dynamic environmental information has changed, for example, whether a new self-moving target has entered the region, or whether an original self-moving target has changed a motion state or behavior pattern. Exemplarily, if no self-moving target is detected in the region in which the pollutant is located at the previous moment, but a cat is detected entering the region at the current moment, it can be determined that the environmental information has changed. For another example, if a planned path of a robotic vacuum cleaner does not pass through the region in which the pollutant is located at the previous moment, but at the current moment, the path is re-planned to pass through the region in which the pollutant is located due to a task change, it can also be determined that the environmental information has changed.

Step 640: When the prediction deviation exists between the actual diffusion state information and the predicted diffusion state information and/or the environmental information has changed, updating the pollution diffusion property model based on the actual diffusion state information and the environmental information at the current moment and re-predicting the pollution diffusion risk of the pollutant.

In step 640, if it is determined in step 620 described above that a prediction deviation exists, and/or it is determined in step 630 that the environmental information has changed, the pollution diffusion property model may be updated and the pollution diffusion risk may be re-predicted.

In some examples, the actual diffusion state information collected at the current moment and the environmental information at the current moment may be used as new input data to update the original pollution diffusion property model. The updated pollution diffusion property model is capable of reflecting actual diffusion characteristics of the pollutant under current environmental conditions. The pollution diffusion risk of the pollutant is re-predicted based on the updated model, and the handling strategy is reformulated or adjusted based on the re-predicted pollution diffusion risk.

Exemplarily, if it is found that an actual diffusion speed of a liquid pollutant is significantly higher than a predicted value, a fluidity index may be increased during updating of the pollution diffusion property model, so that subsequent prediction of the pollution diffusion risk is closer to reality. If it is found that the environmental information has changed (such as a pet being detected entering the region in which the pollutant is located), the dynamic environmental information may be added during updating of the pollution diffusion property model, to re-assess the secondary diffusion risk.

As can be learned from the above technical solution, according to the method provided in the embodiments of the present disclosure, an actual diffusion state of a pollutant and environmental changes are continuously tracked, and a pollution diffusion risk is re-predicted when a change occurs, so that accuracy of predicting the pollution diffusion risk can be ensured.

### Exemplary Apparatus

The method for predicting a pollution diffusion risk provided in the embodiments of the present disclosure is described above. It can be understood that, to implement the various functions of the method for predicting a pollution diffusion risk, an integrated circuit system may include corresponding hardware and software for implementing hardware functions.

A person skilled in the art should easily conceive that, the steps of the method for predicting a pollution diffusion risk described in conjunction with the embodiments of the present disclosure may be implemented in a form of hardware or a combined form of software-driven hardware in the embodiments of the present disclosure. Whether a certain function is implemented in a form of hardware or software-driven hardware depends on specific application and design constraints of the technical solutions. A person skilled in the art may use different methods to implement the described functions for each specific application, but such implementation should not be considered as being beyond the scope of the present disclosure.

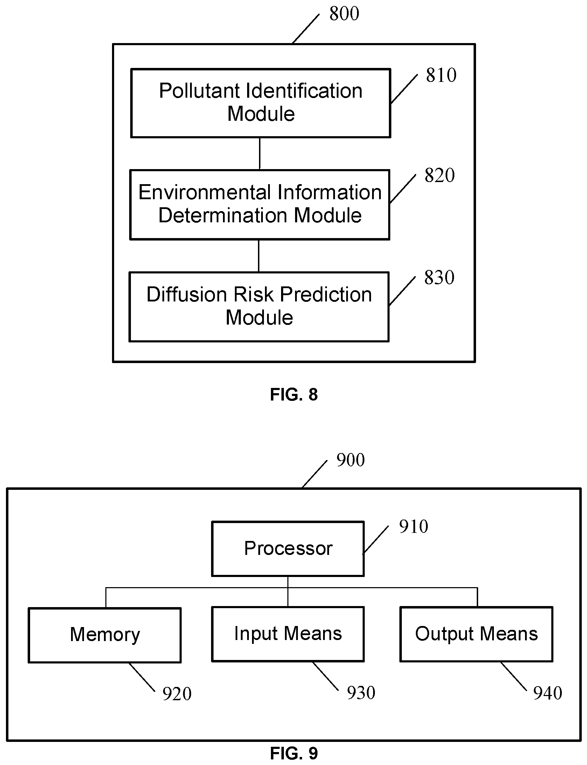

FIG. 8 is a schematic diagram illustrating a structure of an apparatus for predicting a pollution diffusion risk according to an exemplary embodiment of the present disclosure. As shown in FIG. 8, in an embodiment, the apparatus 800 for predicting a pollution diffusion risk includes a pollutant identification module 810, an environmental information determination module 820, and a diffusion risk prediction module 830.

The pollutant identification module 810 is configured for collecting a target image, and recognizing a pollutant based on the target image. The environmental information determination module 820 is configured for acquiring environmental information of an environment in which the pollutant is located, wherein the environmental information includes static environmental information and dynamic environmental information. The diffusion risk prediction module 830 is configured for establishing, based on the pollutant and the environmental information, a pollution diffusion property model for characterizing propagation characteristics of the pollutant in the environment, and predicting a pollution diffusion risk of the pollutant based on the pollution diffusion property model and the environmental information, wherein the pollution diffusion risk is used for characterizing a diffusion trend of the pollutant in the environment.

In an exemplary embodiment, the diffusion risk prediction module 830 is configured for: analyzing the environmental information by using a pre-trained model to determine an environmental propagation property corresponding to the environment; analyzing the pollutant by using the pre-trained model to determine a diffusion property corresponding to the pollutant; and establishing the pollution diffusion property model based on the environmental propagation property and the diffusion property.

In an exemplary embodiment, the static environmental information includes at least one of environmental map information, spatial layout information, environmental material information, and obstacle information, and the dynamic environmental information includes at least one of category information of a self-moving target, state information of the self-moving target, and behavior information of the self-moving target.

In an exemplary embodiment, the diffusion risk prediction module 830 is configured for: predicting a primary diffusion risk of the pollutant in the environment based on the pollution diffusion property model to obtain a primary diffusion prediction result, wherein the primary diffusion risk is used for characterizing a risk of the pollutant diffusing in the environment due to physical properties of the pollutant; and predicting a primary pollution diffusion risk of the pollutant based on the primary diffusion prediction result.

In an exemplary embodiment, the diffusion risk prediction module 830 is configured for: determining, based on the environmental information, a category, a state, and a behavior of a self-moving target in the environment in which the pollutant is located; predicting a movement path of the self-moving target in the environment based on the category, the state, and the behavior of the self-moving target; predicting a secondary diffusion risk of the pollutant based on the pollution diffusion property model and the movement path to obtain a secondary diffusion prediction result, wherein the secondary diffusion risk is used for characterizing a risk of the pollutant being carried to a new position due to movement of the self-moving target; and predicting a secondary pollution diffusion risk of the pollutant based on the secondary diffusion prediction result.

In an exemplary embodiment, the apparatus 800 for predicting a pollution diffusion risk further includes a diffusion risk level prediction module (not shown in the figure), configured for: determining a plurality of diffusion risk assessment index values based on the primary diffusion prediction result and the secondary diffusion prediction result; and determining a diffusion risk level based on the plurality of diffusion risk assessment index values, wherein the diffusion risk level is used for formulating a handling strategy for the pollutant.

In an exemplary embodiment, the diffusion risk prediction module 830 is configured for: collecting a target image of the pollutant in real time, and acquiring actual diffusion state information of the pollutant at a current moment; determining, based on the predicted pollution diffusion risk of the pollutant, predicted diffusion state information corresponding to the current moment, and determining whether a prediction deviation exists between the predicted diffusion state information and the actual diffusion state information; acquiring, in real time, environmental information of the environment in which the pollutant is located, comparing environmental information at the current moment with environmental information at a previous moment prior to the current moment, and determining whether the environmental information has changed; and when the prediction deviation exists between the actual diffusion state information and the predicted diffusion state information and/or the environmental information has changed, updating the pollution diffusion property model and re-predicting the pollution diffusion risk of the pollutant based on the actual diffusion state information and the environmental information at the current moment.

In an exemplary embodiment, the pollution diffusion risk is used for formulating a handling strategy for the pollutant, and the handling strategy includes at least one of a cleaning strategy, an avoidance strategy, and an alert strategy.

A person skilled in the art can understand that the operations performed by each module in the foregoing apparatus embodiment and the technical effects thereof correspond to the operations and technical effects of the corresponding steps in the foregoing method embodiments; for the specific implementations and technical effects thereof, reference may be made to the relevant description of the foregoing method embodiments, which are not repeated herein.

### Exemplary Electronic Device

FIG. 9 is a diagram illustrating a structure of an electronic device according to an exemplary embodiment of the present disclosure. As shown in FIG. 9, the electronic device 900 includes at least one processor 910 and a memory 920.

The processor 910 may be a CPU or another form of processing unit having a data processing capability and/or an instruction execution capability, and may control another component in the electronic device 900 to perform a desired function.

The memory 920 may include one or more computer program products. The computer program product may include various forms of computer readable storage media, such as a volatile memory and/or a non-volatile memory. The volatile memory may include, for example, a RAM (Random Access Memory) and/or a cache. The non-volatile memory may include, for example, a ROM, a hard disk, or a flash memory. The computer readable storage medium may store one or more computer program instructions. The processor 910 may run the one or more computer program instructions to implement the method for predicting a pollution diffusion risk and/or other desired functions in the foregoing embodiments of the present disclosure. By running the foregoing computer program instructions, the electronic device 900 is capable of performing the method for predicting a pollution diffusion risk in the foregoing method embodiments, and has the same technical effects as the foregoing method embodiments. For details, reference may be made to the description of the foregoing method embodiments, which are not repeated herein.

In some examples, the electronic device 900 may further include an input means 930 and an output means 940. The components are interconnected through a bus system and/or other forms of connection mechanisms (not shown).

The input means 930 may further include, for example, a keyboard or a mouse.

The output means 940 may output various information to the outside, and may include, for example, a display, a loudspeaker, a printer, and a communication network and a remote output device connected thereto.

Certainly, for simplicity, only some components in the electronic device 900 that are related to the present disclosure are shown in FIG. 9, and components such as a bus and an input/output interface are omitted. Besides, the electronic device 900 may further include any other appropriate components depending on specific applications.

In some examples, the electronic device 900 may be a cleaning device.

The cleaning device may include a perception sensor group 1130 and an actuator 1140 (not shown in the figure). The components are interconnected through a bus system and/or other forms of connection mechanisms (not shown). The perception sensor group may include, but is not limited to, a camera, LiDAR, an ultrasonic sensor, a humidity sensor, a gas sensor, an infrared sensor, and the like. The actuator may include, but is not limited to, a drive wheel, a roller brush, a mopping cloth, a suction motor, a cleaning liquid spraying device, and the like.

In some examples, the cleaning device may further include components such as a power management module, a communication module, an IMU, and a charging interface. Besides, the cleaning device may further include any other appropriate components depending on specific applications.

### Exemplary Computer Program Product And Computer Readable Storage Medium

In addition to the above method and device, the embodiments of the present disclosure may also relate to a computer program product including computer program instructions that, when run by a processor, cause the processor to perform the steps of the method for predicting a pollution diffusion risk according to the embodiments of the present disclosure that is described in the above "Exemplary Method" section of this specification.

The computer program product may be program code, written with one or any combination of a plurality of programming languages, that is configured for performing the operations in the embodiments of the present disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

When run by a processor, the computer program product is capable of implementing the method for predicting a pollution diffusion risk described in the foregoing method embodiments, and has the same technical effects as the foregoing method embodiments. For details, reference may be made to the description of the foregoing method embodiments, which are not repeated herein.

Furthermore, the embodiments of the present disclosure may further relate to a computer readable storage medium, on which computer program instructions are stored. The computer program instructions, when run by a processor, cause the processor to perform the steps of the method for predicting a pollution diffusion risk according to the embodiments of the present disclosure that is described in the above "Exemplary Method" section of this specification.

The computer readable storage medium may be one readable medium or any combination of a plurality of readable media. The readable medium may be a readable signal medium or a readable storage medium. The readable storage medium may include, for example, but is not limited to electrical, magnetic, optical, electromagnetic, infrared, or semiconductor systems, apparatuses, or devices, or any combination of the above. More specific examples (a non-exhaustive list) of the readable storage medium include: an electrical connection with one or more conducting wires, a portable disk, a hard disk, a RAM, a ROM, an erasable programmable ROM (an EPROM or a flash memory), an optical fiber, a portable compact disk ROM (CD-ROM), an optical storage device, a magnetic storage device, or any suitable combination of the above.

When run by a processor, the program instructions stored on the computer readable storage medium are capable of implementing the method for predicting a pollution diffusion risk described in the foregoing method embodiments, and have the same technical effects as the foregoing method embodiments. For details, reference may be made to the description of the foregoing method embodiments, which are not repeated herein.

Basic principles of the present disclosure are described above in combination with specific embodiments. However, it should be pointed out that the advantages, superiorities, effects, and the like mentioned in the present disclosure are merely examples rather than limitations, and it should not be considered that these advantages, superiorities, effects, and the like are necessary for each of the embodiments of the present disclosure. In addition, specific details disclosed above are merely for examples and for ease of understanding, rather than limitations. The details described above do not limit that the present disclosure must be implemented by using the foregoing specific details.

The block diagrams of the means, apparatus, device, and system involved in the present disclosure are provided as illustrative examples only, and it is not intended to require or imply that they should be connected, arranged, or configured in the manner illustrated in the block diagrams. As a person skilled in the art will appreciate, these means, apparatuses, devices, and systems may be connected, arranged, or configured in any manner. Terms such as "including", "containing", and "having" are open-ended terms, and refer to and may be used interchangeably with "including but not limited to". The terms "or" and "and" as used herein refer to and may be used interchangeably with the term "and/or", unless otherwise clearly stated in the context. The term "such as" as used herein refers to and may be used interchangeably with the term "such as, but not limited to".

It should be further pointed out that, various components or various steps in the apparatus, the device, and the methods of the present disclosure may be decomposed and/or recombined. These decompositions and/or recombinations should be considered as equivalent solutions of the present disclosure.

The above description of the disclosed aspects is provided, so that the present disclosure may be arrived at or carried out by any person skilled in the art. Various modifications to these aspects will be readily apparent to a person skilled in the art, and the generic principles defined herein may be applied to other aspects without departing from the scope of the present disclosure. Therefore, the present disclosure is not intended to be limited to the aspects shown herein, but rather to the widest scope consistent with the principles and novel features disclosed herein.

The above description has been given for the purposes of illustration and description. Furthermore, this description is not intended to limit the embodiments of the present disclosure to the forms disclosed herein. Although a plurality of exemplary aspects and embodiments have been discussed above, a person skilled in the art will figure out certain variations, modifications, changes, additions, and subcombinations thereof.

## Claims

1. A method for predicting a pollution diffusion risk, the method comprising:
collecting (100) a target image, and recognizing a pollutant based on the target image;
acquiring (200) environmental information of an environment in which the pollutant is located, wherein the environmental information comprises static environmental information and dynamic environmental information;
establishing (300), based on the pollutant and the environmental information, a pollution diffusion property model for characterizing propagation characteristics of the pollutant in the environment; and
predicting (400) a pollution diffusion risk of the pollutant based on the pollution diffusion property model and the environmental information, wherein the pollution diffusion risk is used for characterizing a diffusion trend of the pollutant in the environment.

2. The method for predicting a pollution diffusion risk according to claim 1, wherein the establishing (300), based on the pollutant and the environmental information, a pollution diffusion property model for characterizing propagation characteristics of the pollutant in the environment comprises:
analyzing (310) the environmental information by using a pre-trained model to determine an environmental propagation property corresponding to the environment;
analyzing (320) the pollutant by using the pre-trained model to determine a diffusion property corresponding to the pollutant; and
establishing (330) the pollution diffusion property model based on the environmental propagation property and the diffusion property.

3. The method for predicting a pollution diffusion risk according to claim 1, wherein the static environmental information comprises at least one of environmental map information, spatial layout information, environmental material information, and obstacle information, and the dynamic environmental information comprises at least one of category information of a self-moving target, state information of the self-moving target, and behavior information of the self-moving target.

4. The method for predicting a pollution diffusion risk according to claim 1, wherein the pollution diffusion risk of the pollutant comprises a primary pollution diffusion risk; and the predicting (400) a pollution diffusion risk of the pollutant based on the pollution diffusion property model and the environmental information comprises:
predicting (410) a primary diffusion risk of the pollutant in the environment based on the pollution diffusion property model to obtain a primary diffusion prediction result, wherein the primary diffusion risk is used for characterizing a risk of the pollutant diffusing in the environment due to physical properties of the pollutant; and
predicting (420) the primary pollution diffusion risk of the pollutant based on the primary diffusion prediction result.

5. The method for predicting a pollution diffusion risk according to claim 4, wherein the pollution diffusion risk of the pollutant comprises a secondary pollution diffusion risk; and the predicting (400) a pollution diffusion risk of the pollutant based on the pollution diffusion property model and the environmental information further comprises:
determining (430), based on the environmental information, a category, a state, and a behavior of a self-moving target in the environment in which the pollutant is located;
predicting (440) a movement path of the self-moving target in the environment based on the category, the state, and the behavior of the self-moving target;
predicting (450) a secondary diffusion risk of the pollutant based on the pollution diffusion property model and the movement path to obtain a secondary diffusion prediction result, wherein the secondary diffusion risk is used for characterizing a risk of the pollutant being carried to a new position due to movement of the self-moving target; and
predicting (460) the secondary pollution diffusion risk of the pollutant based on the secondary diffusion prediction result.

6. The method for predicting a pollution diffusion risk according to claim 5, wherein after the predicting (400) a pollution diffusion risk of the pollutant based on the pollution diffusion property model and the environmental information, the method further comprises:
determining (510) a plurality of diffusion risk assessment index values based on the primary diffusion prediction result and the secondary diffusion prediction result; and
determining (520) a diffusion risk level based on the plurality of diffusion risk assessment index values, wherein the diffusion risk level is used for formulating a handling strategy for the pollutant.

7. The method for predicting a pollution diffusion risk according to claim 1, wherein after the predicting (400) a pollution diffusion risk of the pollutant based on the pollution diffusion property model and the environmental information, the method further comprises:
collecting (610) a target image of the pollutant in real time, and acquiring actual diffusion state information of the pollutant at a current moment;
determining (620), based on the predicted pollution diffusion risk of the pollutant, predicted diffusion state information corresponding to the current moment, and determining whether a prediction deviation exists between the predicted diffusion state information and the actual diffusion state information;
acquiring (630), in real time, environmental information of the environment in which the pollutant is located, comparing environmental information at the current moment with environmental information at a previous moment prior to the current moment, and determining whether the environmental information has changed; and
when the prediction deviation exists between the actual diffusion state information and the predicted diffusion state information and/or the environmental information has changed, updating (640) the pollution diffusion property model based on the actual diffusion state information and the environmental information at the current moment and re-predicting the pollution diffusion risk of the pollutant.

8. The method for predicting a pollution diffusion risk according to claim 1, wherein the pollution diffusion risk is used for formulating a handling strategy for the pollutant, the handling strategy comprising at least one of a cleaning strategy, an avoidance strategy, and an alert strategy.

9. An apparatus (800) for predicting a pollution diffusion risk, the apparatus (800) comprising:
a pollutant identification module (810), configured for collecting a target image, and recognizing a pollutant based on the target image;
an environmental information determination module (820), configured for acquiring environmental information of an environment in which the pollutant is located, wherein the environmental information comprises static environmental information and dynamic environmental information; and
a diffusion risk prediction module (830), configured for establishing, based on the pollutant and the environmental information, a pollution diffusion property model for characterizing propagation characteristics of the pollutant in the environment; and predicting a pollution diffusion risk of the pollutant based on the pollution diffusion property model and the environmental information, wherein the pollution diffusion risk is used for characterizing a diffusion trend of the pollutant in the environment.

10. The apparatus (800) for predicting a pollution diffusion risk according to claim 9, wherein the diffusion risk prediction module (830) establishes, based on the pollutant and the environmental information, the pollution diffusion property model for characterizing propagation characteristics of the pollutant in the environment through:
analyzing the environmental information by using a pre-trained model to determine an environmental propagation property corresponding to the environment;
analyzing the pollutant by using the pre-trained model to determine a diffusion property corresponding to the pollutant; and
establishing the pollution diffusion property model based on the environmental propagation property and the diffusion property.

11. The apparatus (800) for predicting a pollution diffusion risk according to claim 9, wherein the static environmental information comprises at least one of environmental map information, spatial layout information, environmental material information, and obstacle information, and the dynamic environmental information comprises at least one of category information of a self-moving target, state information of the self-moving target, and behavior information of the self-moving target.

12. The apparatus (800) for predicting a pollution diffusion risk according to claim 9, wherein the pollution diffusion risk of the pollutant comprises a primary pollution diffusion risk; and the diffusion risk prediction module (830) predicts the pollution diffusion risk of the pollutant based on the pollution diffusion property model and the environmental information through:
predicting a primary diffusion risk of the pollutant in the environment based on the pollution diffusion property model to obtain a primary diffusion prediction result, wherein the primary diffusion risk is used for characterizing a risk of the pollutant diffusing in the environment due to physical properties of the pollutant; and
predicting the primary pollution diffusion risk of the pollutant based on the primary diffusion prediction result.

13. The apparatus (800) for predicting a pollution diffusion risk according to claim 12, wherein the pollution diffusion risk of the pollutant comprises a secondary pollution diffusion risk; and the diffusion risk prediction module (830) predicts the pollution diffusion risk of the pollutant based on the pollution diffusion property model and the environmental information further through:
determining, based on the environmental information, a category, a state, and a behavior of a self-moving target in the environment in which the pollutant is located;
predicting a movement path of the self-moving target in the environment based on the category, the state, and the behavior of the self-moving target;
predicting a secondary diffusion risk of the pollutant based on the pollution diffusion property model and the movement path to obtain a secondary diffusion prediction result, wherein the secondary diffusion risk is used for characterizing a risk of the pollutant being carried to a new position due to movement of the self-moving target; and
predicting the secondary pollution diffusion risk of the pollutant based on the secondary diffusion prediction result.

14. A computer readable storage medium, on which computer program instructions are stored, wherein the computer program instructions, when executed by a processor (910), cause the processor (910) to implement the method according to any one of claims 1 to 8.

15. An electronic device (900), comprising:
one or more processors (910), and
a memory (920), on which computer instructions are stored, wherein the computer instructions, when executed by the one or more processors (910), cause the one or more processors (910) to implement the method according to any one of claims 1 to 8.
